# EUROPEAN PATENT APPLICATION

(11) **EP 4 398 427 A1**
(43) Date of publication of application: **10.07.2024**
(21) Application number: 23212678.9
(22) Date of filing: 28.11.2023
(51) Int. Cl.: H01R 13/74, H01R 24/60, H02J 7/00, H05K 5/00, A45C 11/00

(54) **INTEGRATED PORT CONTACT AND CHARGING BEZEL**

(30) Priority: 04.01.2023 US 202318149880
(71) Applicant: Meta Platforms Technologies, LLC, Menlo Park, CA 94025 (US)
(72) Inventor: HENRY, Emron Jackson, Menlo Park (US); WEBER, Adam Richard, Menlo Park (US); EVERSON, Neil, Menlo Park (US)
(74) Representative: Murgitroyd & Company

(57) **Abstract**

Aspects of the present disclosure are directed to a USB-C or other port connector assembly for providing data transfer and charging connections in an electronic device. The port connector assembly can include a data connector and a contact charging bezel. The port connector can include: a body member; and a connector tongue mounted in the body member and configured to connect to a plug for either one or both of data transfer and power delivery. The contact charging bezel can include: charging contacts configured to be placed in contact with conductive contact elements of a charging device; and an arm structure connected to the charging contacts and configured to be mounted on the port connector.

## Description

### TECHNICAL FIELD

The present disclosure is directed to a connector assembly including a connector (e.g., USB-C) with an integrated contact charging bezel.

### BACKGROUND

Consumer electronics devices commonly include a communications port, such as a micro-USB, USB-C, lighting, thunderbolt, etc., port, in addition to wireless charging components or a contact charging connector for charging the device while the device is in a dock or on charging pad. However, in such conventional devices, the contacts of the contact charging connector are located separately from the communications port and are typically insert molded to a housing of the device or assembled into holes in the housing. Providing separate wireless charging contact components or a separate contact charging port in an electronic device adds manufacturing expense and design/manufacturing complexity. In addition, providing a separate contact charging port in an electronic device adds other potential ingress points through which environmental contaminants such as debris and liquids can enter and potentially damage the electronic device.

### SUMMARY OF THE INVENTION

Aspects of the present disclosure are directed to a connector assembly including a port connector and a contact charging bezel integrated with the port connector. While below USB-C port is referenced throughout, it will be understood that other port types such as USB, micro-USB, lighting, thunderbolt, etc. ports can be used instead anywhere USB-C is referenced. The contact charging bezel includes charging contacts for contacting conductive contact elements of a charging device and arms extending from the charging contacts. The charging contacts can be positioned in a port opening in a case of an electronic device. The USB-C connector can include a body member, and a connector tongue mounted in the body member and aligned with a USB-C port opening of the electronic device for connecting to a USB-C plug for either one or both of USB-C data transfer and USB-C power delivery. The contact charging bezel can be mounted on the USB-C connector and the connector tongue can be disposed in a space between the charging contacts. The arms of the contact charging bezel can contact resilient connection members on the body member of the USB-C connector to be electrically connected to the resilient connection members.

Other aspects of the present disclosure are directed to an electronic device including the USB-C connector assembly.

In accordance with a first aspect of the present disclosure, there is provided a connector assembly for data transfer and electrical charging comprising: a USB-C connector and a contact charging bezel. The USB-C connector can include: a body member; and a connector tongue mounted in the body member and configured to connect to a USB-C plug for either one or both of USB-C data transfer and USB-C power delivery. The contact charging bezel can include: charging contacts configured to be placed in contact with conductive contact elements of a charging device; and an arm structure connected to the charging contacts and configured to be mounted on the USB-C connector.

In some embodiments, the charging contacts can be configured to be arranged such that the connector tongue is disposed in a space between the charging contacts.

In some embodiments, the USB-C connector can further include conductive members disposed on the body member. The arm structure can be configured to contact the conductive members to be electrically connected to the conductive members.

In some embodiments, the conductive members can be spring clips configured to apply respective forces to the arm structure.

In some embodiments, the arm structure can include recessed portions configured to receive the spring clips to retain the USB-C connector in place.

In some embodiments, the connector assembly can further include a bezel housing covering exterior surfaces of a section of the arm structure and interior surfaces of the section of the arm structure.

In some embodiments, the arm structure includes: a first arm connected to a first charging contact of the charging contacts and configured to contact a first conductive member among the conductive members; and a second arm electrically connected to a second charging contact of the charging contacts and configured to contact a second conductive member among the conductive members. A portion of the bezel housing can be disposed between the first and second charging contacts to electrically insulate the first and second charging contacts from each other and electrically insulate the first and second arms from each other.

In some embodiments, the charging contacts can be exposed from an end of the bezel housing. The connector assembly can further include a gasket disposed on the charging contacts at a position adjacent to the end of the bezel housing.

In some embodiments, the connector assembly can further include a gasket disposed on the body member and configured to engage a recessed portion in a portion of the bezel housing covering the interior surfaces of the section of the arm structure.

In accordance with a second aspect of the present disclosure, there is provided a connector assembly for providing data transfer and charging connections, the connector assembly comprising: a connector, a first bezel member, and a second bezel member. The connector can include: a body member; and a connector tongue mounted in the body member and configured to connect to a plug for either one or both of data transfer and power delivery. The first bezel member can be configured to be mounted on the connector and can include a first charging contact configured to be placed in contact with a contact element of a charging device. The second bezel member can be configured to be mounted on the connector and can include a second charging contact configured to be placed in contact with another contact element of the charging device. The connector tongue can be configured to be disposed between the first and second bezel members.

In some embodiments, the connector assembly can further include: a first conductive member disposed on the body member; and a second conductive member disposed on the body member. The first bezel member can be configured to be electrically connected to the first conductive member. The second bezel member can be configured to be electrically connected to the second conductive member.

In some embodiments, the first conductive member can be a first spring clip and the second conductive member can be a second spring clip. The first and second bezel members can be configured to be mounted on the body member to contact the first and second spring clips, respectively.

In some embodiments, the connector assembly can further include a bezel housing partially covering the first and second bezel members and electrically insulating the first and second bezel members from each other.

In some embodiments, the bezel housing can be molded with the first and second bezel members.

In some embodiments, the connector comprises a USB-C connector.

In some embodiments, the plug comprises a USB-C plug.

In accordance with a third aspect of the present disclosure, there is provided an electronic device can include: an outer case having an opening; a connector; and a contact charging bezel. The connector can be electrically connected to a printed circuit board (FPC) and can include: a body member mounted on the FPC; and a connector tongue mounted in the body member and aligned with the opening, the connector tongue being configured to connect to a plug for either one or both of data transfer and power delivery. The contact charging bezel can include: charging contacts exposed at the opening and configured to be placed in contact with conductive contact elements of a charging device, and an arm structure connected to the charging contacts and configured to be mounted on the connector.

In some embodiments, the charging contacts can be shaped to conform to a shape of the opening and the connector tongue can be disposed in a space between the charging contacts.

In some embodiments, the connector can be a USB-C connector and the plug can be a USB-C plug. The USB-C connector can further include resilient conductive members disposed on the body member and electrically connected to the printed circuit board. The arm structure can be configured to contact the resilient conductive members to be electrically connected to the resilient conductive members.

In some embodiments, the electronic device can further include a bezel housing covering a section of the arm structure. The contact charging bezel can be retained by a mounting bracket in the outer case such that the bezel housing interfaces with the mounting bracket.

In some embodiments, the charging contacts can be exposed from an end of the bezel housing. The electronic device can further include a gasket disposed on the charging contacts between the opening and the end of the bezel housing.

In some embodiments, the connector can further include a gasket disposed on the body member and engaging a portion of the bezel housing disposed on a portion of the bezel housing covering interior surfaces of the section of the arm structure.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Figure 1A is a rear perspective view illustrating a portion of an electronic device including a USB-C connector assembly, according to an embodiment.
Figure 1B is a front perspective view illustrating the portion of the electronic device.
Figure 1C is a front view illustrating the portion of the electronic device.
Figure 1D is a top view of the portion of the electronic device.
Figure 2 is a side perspective view illustrating the USB-C connector assembly.
Figure 3 is a top perspective view illustrating the USB-C connector assembly 100.
Figure 4 is a partial side cross-sectional view taken along line A-A of Figure 1D, illustrating the USB-C connector assembly.
Figure 5 is a perspective view showing the USB-C connector assembly with a bezel housing being hidden from view.
Figure 6 is a perspective view of a charging dock configured to electrically charge the electronic device through electrical contact with the contact charging bezel, according to an embodiment.
Figure 7 is a perspective view of a charging travel case configured to electrically charge the electronic device through electrical contact with the contact charging bezel, according to an embodiment.

The features and aspects introduced here may be better understood by referring to the following Detailed Description in conjunction with the accompanying drawings, in which like reference numerals indicate identical or functionally similar elements. The drawings may not be to scale, and the relative size, proportions, and depiction of elements in the drawings may be exaggerated for clarity, illustration, and convenience.

### DETAILED DESCRIPTION

Several embodiments are discussed below in more detail in reference to the figures.

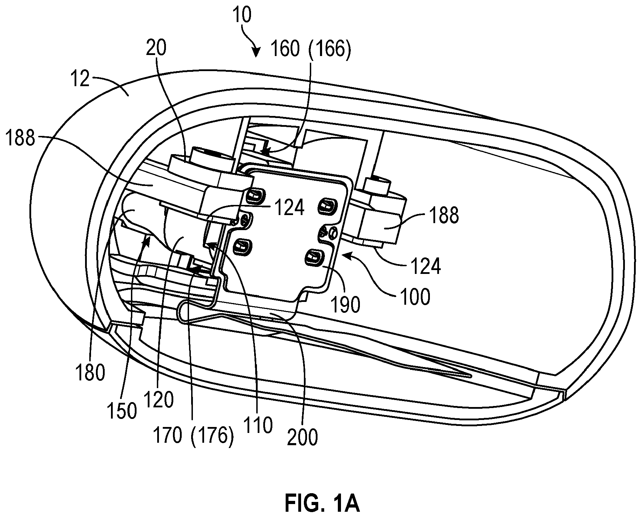

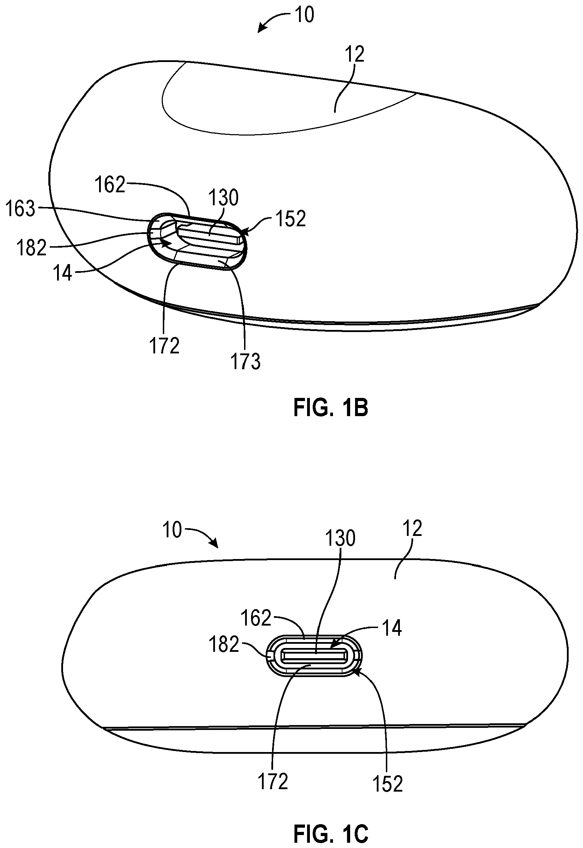

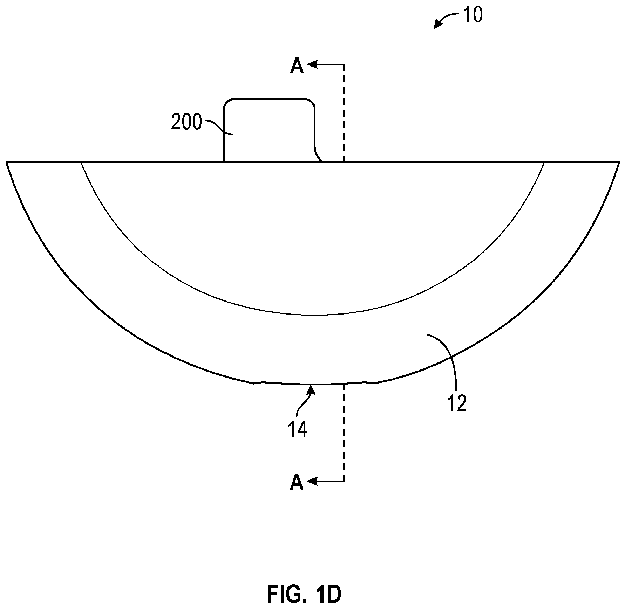

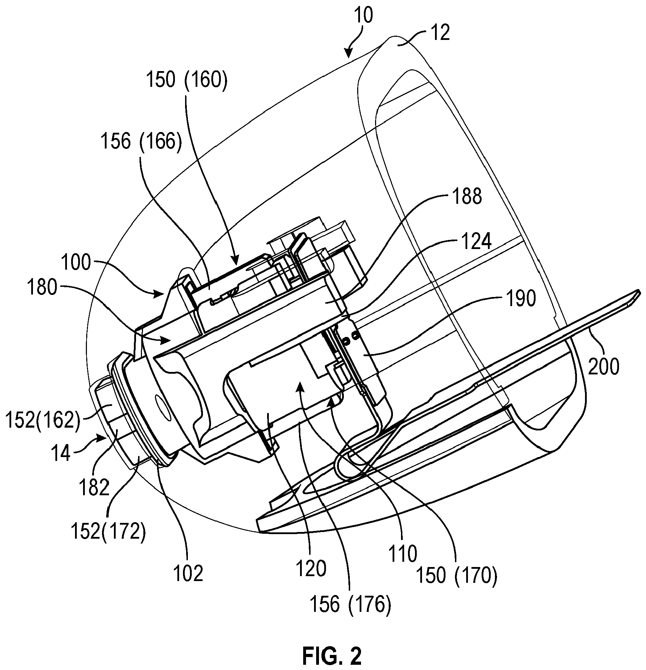

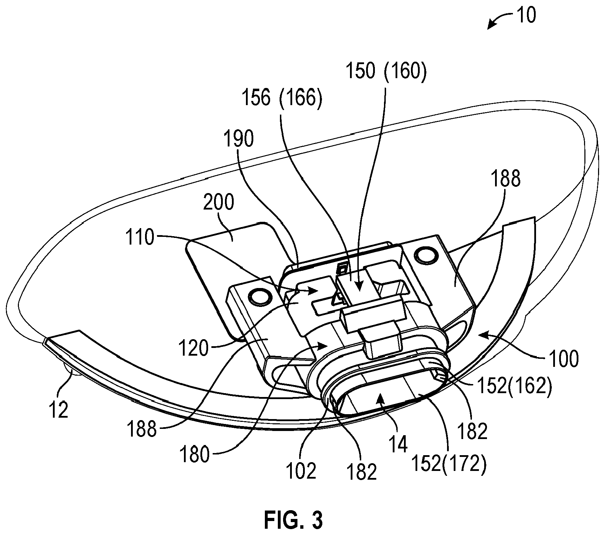

Figures 1Ato 1D illustrate a portion of an electronic device 10 including a USB-C connector assembly 100 (hereinafter, "connector assembly 100"). As noted above, in some implementations, the connector assembly 100 can be of a type other than USB-C such as USB, microUSB, thunderbolt, lightning, etc. Figure 2 is a side perspective view illustrating the connector assembly 100. Figure 3 is a top perspective view illustrating the connector assembly 100.

Referring to Figures 1A to 1D, the connector assembly 100 is disposed in an internal space of an outer housing or outer case 12 of the electronic device 10 and is configured to provide data transfer and/or power delivery functionality and contact charging functionality to the electronic device 10. For example, the electronic device 10 can be a portable electronic device 10, such as a portable gaming device, a mobile phone, a tablet computer, a portable media player, or the like. However, the electronic device 10 is not limited to the foregoing examples.

Referring to Figures 1A, 2, and 3, the connector assembly 100 includes a (USB-C) connector 110 and a contact charging bezel 150. The connector 110 includes a body member 120 and a connector tongue 130 that is disposed in the body member 120. The connector tongue 130 is aligned with and accessible through a port opening 14 in the outer case 12 of the electronic device 10.

As shown in Figures 1A, 2, and 3, in some embodiments, the contact charging bezel 150 can be composed of a first bezel member 160 and a second bezel member 170 disposed in a bezel housing 180. The bezel housing 180 attaches the first and second bezel members 160 and 170 together into a single unit. As shown in Figures 1B, 1C, 2, and 3, the first bezel member 160 can include a first charging contact 162 that is exposed at the port opening 14, and a first arm 166 connected to the first charging contact 162 and mounted on the body member 120 of the connector 110. The second bezel member 170 can include a second charging contact 172 that is exposed at the port opening 14, and a second arm 176 connected to the second charging contact 172 and mounted on the body member 120 of the connector 110.

Thus, the first charging contact 162 and the second charging contact 172 form a charging contact structure 152 of the contact charging bezel 150. The first arm 166 and the second arm 176 form an arm structure 156 of the contact charging bezel 150 that is integrated with the charging contact structure 152 and mounted on the body member 120 of the connector 110.

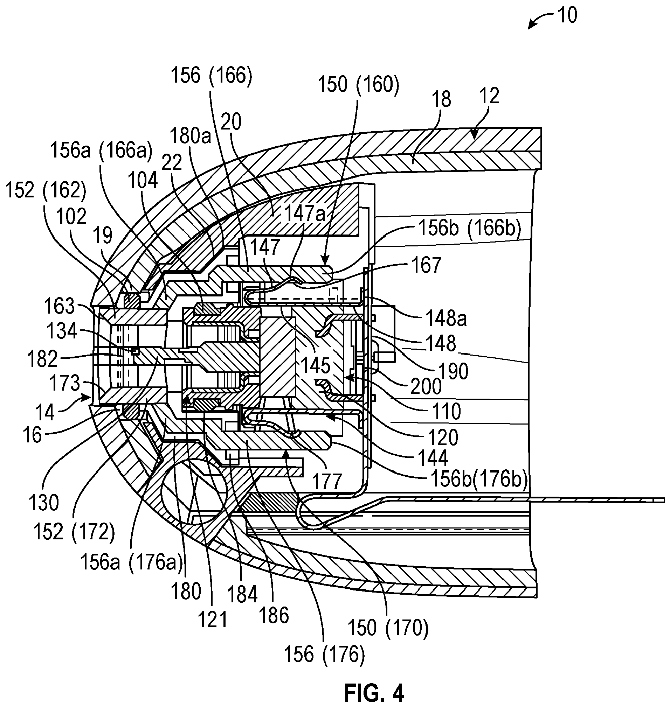

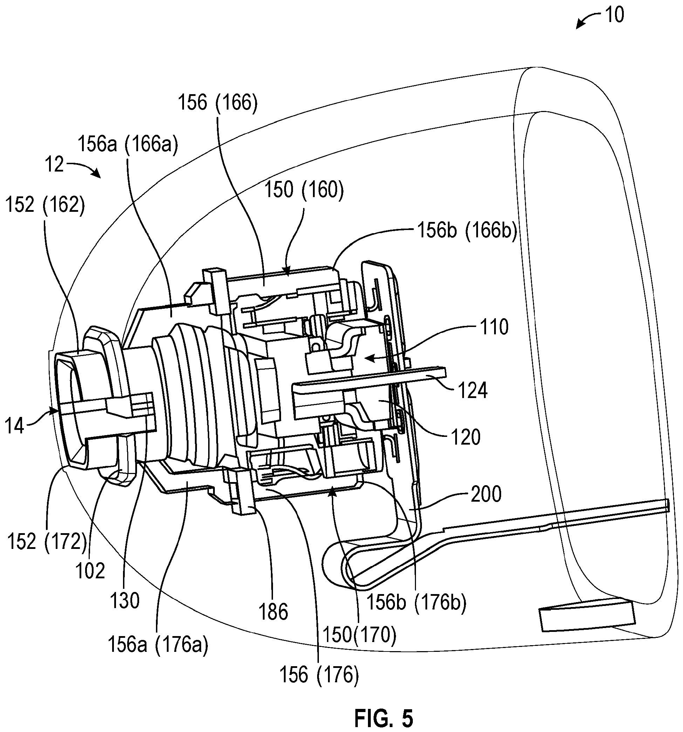

Features of the connector assembly 100, according to example embodiments, will now be discussed in greater detail with reference to Figures 4 and 5. Figure 4 is a partial side cross-sectional view taken along line A-A of Figure 1D. Figure 5 is a perspective view showing the connector assembly 100 with the bezel housing 180 hidden to show features of the contact charging bezel 150 more clearly.

Referring to Figure 4, as will be described in more detail later, when installed in the electronic device 10, the contact charging bezel 150 is mounted on the connector 110, and the contact charging bezel 150 is secured within a mounting bracket 20 so as to fix the connector assembly 100 inside the outer case 12 of the electronic device 10. As shown in Figures 4 and 5, in some embodiments, the connector 110 can be mounted on a front surface of and electrically connected to a flexible printed circuit board (FPC) 200 that is electrically connected to various components of the electronic device 10.

Still referring to Figures 4 and 5, in some embodiments, the body member 120 of the connector 110 can be a substantially cylindrical member. The body member 120 is made of a non-conductive material and houses (USB-C) circuit components that are electrically connected to the flexible FPC 200 for performing data transfer and/or power delivery. For example, the body member 120 can be made of a thermoplastic material such as, but not limited to, nylon.

The connector tongue 130 can be mounted in a central region of the body member 120, and can protrude from the body member 120 at a front end 121 of the connector 110. The connector tongue 130 includes a plurality of conductive terminals 134 electrically connected to the (USB-C) circuit components. The conductive terminals 134 are configured to be connected to a plug and transfer electrical signals (data and/or power) to the connector 110 from the plug and from the connector 110 to the plug.

As shown in Figures 1A and 4, in some embodiments, the connector assembly 100 can include a stiffener 190 attached to a rear side of the flexible FPC 200 for stiffening the region of the flexible FPC 200 behind the connector 110.

Referring to Figure 4, in some embodiments, the connector 110 includes spring clips 144 mounted in the body member 120. The spring clips 144 are made of a conductive material such as, but not limited to, copper, aluminum, silver, gold, or an alloy of copper, aluminum, silver, or gold. The spring clips 144 function as conductive contact members for electrically connecting the contact charging bezel 150 to the flexible FPC 200. The spring clips 144 are electrically insulated from conductive terminals 134 on the connector tongue 130 and the circuit components in the connector 110, such that they do not transfer electrical signals to or from the circuit components in the connector 110. Although the embodiment illustrated in Figure 4 and described herein includes the spring clips 144, alternative embodiments can employ different types of conductive members, such as conductive pins, exposed on the outer surface of the body member 120.

As shown in Figure 4, each spring clip 144 can be a substantially hook-shaped member having a base portion 146 mounted in the body member 120, a first arm portion 147 extending from one end of the base portion 146 and bent to be inclined with respect to the base portion 146, and a second arm portion 148 extending from another end of the base portion 146. The second arm portion 148 can be bent with respect to the base portion 146 to form a flat contact surface.

The first arm portion 147 of each spring clip 144 extends outside the sidewall of the body member 120 and terminates at a first end portion 147a of the spring clip 144 that is disposed outside of the body member 120. As will be discussed later in more detail, the first end portions 147a of the spring clips 144 engage the contact charging bezel 150 such that the spring clips 144 are in electrical contact with the contact charging bezel 150.

The second arm portion 148 of the spring clip 144 extends outside of the rear end of the body member 120 and terminates at a second end portion 148a of the spring clip 144 outside of the body member 120. The second end portions 148a of the spring clips 144 can be in electrical contact with the flexible FPC 200.

Referring to Figures 4 and 5, as described above, the contact charging bezel 150 includes the charging contact structure 152 disposed at a front portion thereof and the arm structure 156 disposed at a rear portion thereof. The contact charging bezel 150 is formed by the first bezel member 160 and the second bezel member 170. The first and second bezel members 160 and 170 can be symmetrical with respect to each other and can each form one half of the contact charging bezel 150. The first bezel member 160 and the second bezel member 170 are electrically insulated from each other, as described in more detail below.

As shown in Figures 4 and 5, the first bezel member 160 includes the first charging contact 162 at a front portion thereof and the first arm 166 at a rear portion thereof. The second bezel member 170 includes the second charging contact 172 at a front portion thereof and a the second arm 176 at a rear portion thereof. The first charging contact 162 of the first bezel member 160 and the second charging contact 172 of the second bezel member 170 form the charging contact structure 152 at the front portion of the contact charging bezel 150. The first arm 166 of the first bezel member 160 and the second arm 176 of the second bezel member 170 form the arm structure 156 at the rear portion of the contact charging bezel 150.

The first charging contact 162 and the first arm 166 are connected to each other to transmit electrical signals therethrough and can be made of one or more electrically conductive materials. The second charging contact 172 and the second arm 176 are connected to each other to transmit electrical signals therethrough and can be made of one or more electrically conductive materials, which can be the same as the materials of the first charging contact 162 and the first arm 166. For example, the first and second charging contact 162 and 172 can be made of copper plated with platinum, and the first and second arms 166 and 176 can be made of copper. However, other conductive materials can be used for the first and second charging contacts 162 and 172 and the first and second arms 166 and 176.

In some embodiments, the first charging contact 162 and the first arm 166 can be integrally formed, and the second charging contact 172 and the second arm 176 can be integrally formed. However, in other embodiments, the first charging contact 162 and the first arm 166 can be separate components that are bonded or fastened together, and the second charging contact 172 and the second arm 176 can be separate components that and bonded or fastened together.

The charging contact structure 152 formed by the first and second charging contacts 162 and 172 will now be described in more detail.

Referring to Figures 1B and 4, the first charging contact 162 can include a first contact surface 163 that is externally exposed at the port opening 14. The second charging contact 172 can include a second contact surface 173 that is externally exposed at the port opening 14. As shown in Figure 1B, in some embodiments, the first and second charging contacts 162 and 172 can each have a semi-oval sidewall configured to conform to the shape of a respective portion of the port opening 14, and the first and second contact surfaces 163 and 173 can each have a semi-oval shape. Thus, in some embodiments, the charging contact structure 152 formed by the first and second charging contacts 162 and 172 can have a substantially oval sidewall configured to conform to the shape of the port opening 14, as shown in Figures 1B and 4. For example, the outer circumference of the sidewall of the charging contact structure 152 can be slightly smaller than or equal to the circumference of the port opening 14, and the sidewall of the charging contact structure 152 can have an outer perimeter shape that is substantially the same as the perimeter shape of the port opening 14.

As illustrated in Figures1B, 1C, 2, and 4, the first and second charging contacts 162 and 172 can be electrically insulated from each other by an interior portion 182 of the bezel housing 180, which is described in more detail below, and are externally exposed at the port opening 14.

In the configuration of the first and second charging contacts 162 and 172 described above, the charging contact structure 152 is disposed around the connector tongue 130. That is, the connector tongue 130 is disposed in a space between the first and second charging contacts 162 and 172. In some embodiments, the charging contact structure 152 and the connector tongue 130 can be coaxial.

Although specific shapes and sizes of the charging contact structure 152 and the first and second charging contacts 162 and 172 are described herein, these are only examples. It is to be understood that the charging contact structure 152 (e.g., first and second charging contacts 162 and 172) can have shapes and sizes other than those specifically shown and described herein.

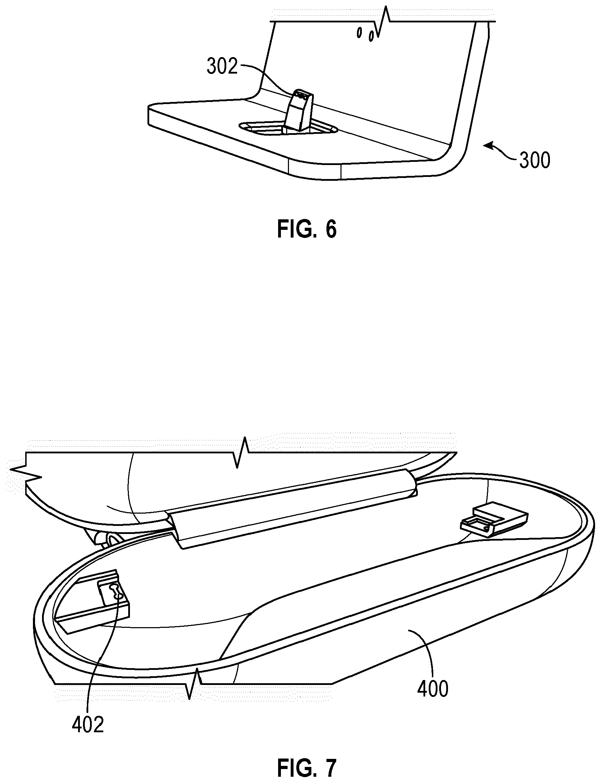

The charging contact structure 152 formed by the first and second charging contacts 162 and 172 is configured to contact electrical contacts, such as contact pins, of a charging device to electrically charge the electronic device 10. More specifically, the first and second contact surfaces 163 and 173 are configured to contact respective conductive contact elements of the charging device to establish an electrical connection with the respective conductive contact elements of the charging device. As an example, referring to Figure 6, the first and second contact surfaces 163 and 173 can be configured to rest on or against respective contact pins 302 of a charging dock 300. As another example, referring to Figure 7, the first and second contact surfaces 163 and 173 can be configured to rest on or against respective contact pins 402 of a charging travel case 400.

The arm structure 156 formed by the first and second arms 166 and 176 will now be described in more detail.

As discussed above, and as illustrated in Figures 4 and 5, the arm structure 156 is configured to be mounted on the body member 120 of the connector 110. That is, the arm structure 156 can accommodate the body member 120 in a space inside the arm structure 156. More specifically, the first and second arms 166 and 176 can accommodate the body member 120 in a space between the first and second arms 166 and 176.

As shown in Figures 4 and 5, the first arm 166 includes a front portion 166a extending rearward from the first charging contact 162, and a rear portion 166b extending rearward from the front portion 166a. The front portion 166a can be inclined with respect to the first charging contact 162, and the rear portion 166b can be substantially flat. In some embodiments, the front portion 166a of the first arm 166 can have a stepped internal surface and a stepped external surface, as illustrated in Figure 4.

The second arm 176 includes a front portion 176a extending rearward from the second charging contact 172, and a rear portion 176b extending rearward from the front portion 176a. The front portion 176a can be inclined with respect to the second charging contact 172, and the rear portion 176b can be substantially flat. In some embodiments, the front portion 176a of the second arm 176 can have a stepped internal surface and a stepped external surface, as illustrated in Figures 4 and 5.

The front portion 166a of the first arm 166 and the front portion 176a of the second arm 176 form a front portion 156a the arm structure 156. The rear portion 166b of the first arm 166 and the rear portion 176b of the second arm 176 form the rear portion 156b the arm structure 156. In embodiments configured as described herein, due to the configurations of the front and rear portions 166a and 166b of the first arm 166 and the configurations of the front and rear portions 176a and 176b of the second arm 176, the height of the internal space of the arm structure 156 (e.g., the distance between the first and second arms 166 and 176) can progressively increase in the front portion 156a of the arm structure 156 and can be substantially constant in the rear portion 156b of the arm structure 156.

As shown in Figures 1A and 2-4, the contact charging bezel 150 is partially covered by the bezel housing 180, which is disposed on inner and outer surfaces of the contact charging bezel 150. For example, the bezel housing 180 can be molded with or attached to the contact charging bezel 150 (i.e., the first and second bezel members 160 and 170) to form an integrated bezel assembly. In some embodiments, the bezel housing 180 can be insert molded with the contact charging bezel 150. The bezel housing 180 is made of an electrically insulating material. For example, the bezel housing 180 can be made of a thermoplastic material such as nylon. However, other insulating materials can be used for the bezel housing 180.

The bezel housing 180 can cover a section of the arm structure 156 of the contact charging bezel 150 and a section of the charging contact structure 152 of the contact charging bezel 150. For example, in some embodiments, the bezel housing 180 can cover exterior and interior surfaces of a section of the first bezel member 160, and exterior and interior surfaces of a section of the second bezel member 170. In some embodiments, as illustrated in Figure 2, the bezel housing 180 can cover exterior and interior surfaces of the front portion 166a of the first arm, exterior and interior surfaces of the front portion 176a of the second arm 176, a portion of an exterior surface of the first charging contact 162, and a portion of an exterior surface of the second charging contact 172. As shown in Figure 4, end portions of the bezel housing 180 on the first and second arms 166 and 176 can be sealed with adhesive 186.

Referring to Figures 1B, 1C, 2, and 4, the interior portion 182 of the bezel housing 180 can be disposed between opposing side portions of the first and second charging contacts 162 and 172. The interior portion 182 of the bezel housing 180 spaces apart the first and second charging contacts 162 and 172 to prevent the first and second charging contacts 162 and 172 from contacting each other. Thus, the interior portion 182 of the bezel housing 180 electrically insulates the first and second bezel members 160 and 170 from each other by electrically insulating the first and second charging contacts 162 and 172 from each other.

The bezel housing 180 can have a stepped external surface 180a corresponding to the stepped external surfaces of the front portion 166a of the first arm 166 and the front portion 176a of the second arm 176.

As shown in Figure 4, front end portions of the first and second charging contacts 162 and 172 are exposed from the bezel housing 180 and disposed in the port opening 14. Additionally, the rear portions 166b and 176b of the first and second bezel members 160 and 170, respectively, are exposed from the bezel housing 180.

As illustrated in Figures 4 and 5, a first gasket 102 is disposed around the charging contact structure 152 (e.g., around the first and second charging contacts 162 and 172). The first gasket 102 can be tightly secured on the exterior surfaces of the first and second charging contacts 162 and 172 at a position adjacent to a front end of the bezel housing 180 to form a first seal of the connector assembly 100. More specifically, the first gasket 102 can be positioned between the port opening 14 and the front end of the bezel housing 180. The first gasket 102 can be made of an elastomeric material such as silicone or rubber.

As shown in Figure 4, in some embodiments, a second gasket 104 can be disposed around the body member 120 of the (USB-C) connector. The second gasket 104 can be tightly secured around a front end portion of the body member 120 to form a second seal of the connector assembly 100.

As shown in Figures 1A and 2-5, when the connector assembly 100 is installed in the electronic device 10, the contact charging bezel 150 can be secured in place by the mounting bracket 20 such that the front end portions of the first and second charging contacts 162 and 172 are disposed in the port opening 14. In some embodiments, as illustrated in Figure 4, the mounting bracket 20 retains the bezel housing 180 such that the stepped external surface 180a of the bezel housing 180 corresponding to the stepped external surfaces of the first and second arms 166 and 176 interfaces with corresponding stepped surfaces 22 of the mounting bracket 20.

Additionally, as illustrated in Figures 1A, 2, and 3, the bezel housing 180 can include longitudinally extending mounting arms 188 disposed on each side thereof. In some embodiments, the mounting arms 188 can be fastened between the mounting bracket 20 and respective flanges 124 on each side of the body member 120 of the connector 110. For example, the flanges 124 can be disposed below the mounting arms 188 and the mounting bracket 20 can be disposed above the mounting arms 188.

Referring to Figure 4, the first gasket 102 is retained in a recessed portion or groove 19 in an inner wall 18 of the outer case 12. Thus, the first gasket 102 further secures the contact charging bezel 150 in place and forms a seal preventing contaminants such as liquid, dirt, and debris from entering the internal space of the outer case 12 through a space 16 between the case 12 and the first charging contact 162 and a space 17 between the outer case 12 and the second charging contact 172.

Further, as shown in Figures 4 and 5, when the connector assembly 100 is installed in the electronic device 10, the connector 110 is inserted into the arm structure 156 of the contact charging bezel 150. For example, the front end portion of the body member 120 can be received in and engage the front portion 156a of the arm structure 156 (e.g., the front portion 166a of the first arm 166 and the front portion 176a of the second arm 176). More specifically, the front end portion of the body member 120 can be disposed against a portion of the bezel housing 180 covering the interior surfaces of the front portion 166a of the first arm 166 and the front portion 176a of the second arm 176.

When the USB-C arm structure 156 of the contact charging bezel 150 is mounted on the connector 110, the rear portion 156b of the arm structure 156 can contact the first end portions 144a of the spring clips 144 such that the contact charging bezel 150 is electrically connected to the spring clips 144. More specifically, as shown in Figure 4, the first arm 166 of the first bezel member 160 and the second arm 176 of the second bezel member 170 can be mounted on the body member 120, and the first arm 166 (e.g., the rear portion 166b) and the second arm 176 (e.g., the rear portion 176b) can be in contact with and electrically connected to the first end portions 144a of the spring clips 144, respectively. Thus, the spring clips 144 can electrically connect the contact charging bezel 150 to the flexible FPC 200.

In some embodiments, the first end portions 144a of the spring clips 144 can be retained in grooves 167 and 177 in the rear portion 166b of the first arm 166 and the rear portion 176b of the second arm 176, respectively. The spring clips 144 can be configured to apply forces against the first and second arms 166 and 176. For example, each of the spring clips 144 can apply a force of approximately 1 newton to the first and second arms 166 and 176, respectively. Thus, in addition to providing an electrical connection, the spring clips 144 also function to retain the connector 110 in place in the arm structure 156 of the contact charging bezel 150.

Additionally, the spring clips 144 compensate for potential variances in the size and shape of the contact charging bezel 150 and the body member 120 of connectors 110 due to manufacturing tolerances. Because the spring clips 144 are resilient conductive members, the spring clips 144 can provide secure contact and stable electrical connection between contact charging bezels 150 and body members 120 of various sizes within prescribed manufacturing tolerances. For example, when a size difference between the contact charging bezel 150 and the body member 120 is less than a nominally specified difference, the spring clips 144 prevent excessive mounting forces from being transmitted between the charging bezel 150 and the connector 110. On the other hand, when a size difference between the contact charging bezel 150 and the body member 120 is greater than a nominally specified difference, the spring clips 144 apply sufficient force to prevent separation of the connector 110 from the contact charging bezel 150 and loss of electrical connection between the contact charging bezel 150 and the flexible FPC 200.

Additionally, as shown in Figure 4, the second gasket 104 can be retained in a recessed portion or groove 184 in the portion of the bezel housing 180 covering the interior surfaces of the front portion 166a of the first arm 166 and the front portion 176a of the second arm 176. Thus, the second gasket 104 further secures the connector 110 in place in the contact charging bezel 150 and forms a seal preventing contaminants such as liquid, dirt, and debris from propagating past the connector 110 through the space inside the contact charging bezel 150.

The connector assembly 100 according to the embodiments disclosed herein includes (USB-C or other connector) data and/or charging functionality and contact charging functionality through a single port. That is, a connection with the connector tongue 130 of the connector 110 and a connection with the first and second charging contacts 162 are accessible at the single port opening 14 in the outer case 12 of the electronic device 10. When a plug of a USB-C cable or other plug is connected to the connector tongue 130, data communications and/or power supply to the electronic device 10 can be performed through the circuit components of the connector 110. Alternatively, when the first and second charging contacts 162 and 172 of the contact charging bezel 150 are placed in contact with respective conductive contact elements of a charging dock or a charging case, contact charging of the electronic device 10 can be performed through a separate electrical connection between the contact charging bezel 150 and spring clips 144 mounted on the body member 120 of the connector 110.

According to embodiments disclosed herein, a USB-C connector assembly includes a USB-C connector and an contact charging bezel integrated with the USB-C connector. The contact charging bezel includes charging contacts for contacting conductive contact elements of a charging device and arms extending from the charging contacts and mounted on the USB-C connector. The charging contacts can be positioned in a port opening in an outer case of an electronic device. The USB-C connector includes a body member, and a connector tongue mounted in the body member and configured to be aligned with the port opening for connecting to a USB-C plug for either one or both of USB-C data transfer and USB-C power delivery. The contact charging bezel can accommodate the USB-C connector a space between the arms of the contact charging bezel and the connector tongue can be disposed in a space between the charging contacts.

Due to the connector assembly providing data transfer/power delivery connectivity and contact charging connectivity through the single port opening in an outer case of an electronic device, the number of ingress points into the electronic device is reduced in comparison with electronic devices that include multiple openings in an outer case for data and contact charging connectivity. The reduced number of ingress points provided by the connector assembly disclosed herein improves waterproofing of the electronic device. Additionally, because the connector assembly disclosed herein enables data and contact charging connections to be made at the same location on the electronic device, the data and contact charging connections are intuitive for a user. Further, by providing the contact charging bezel at the single port opening, the aesthetic appearance of the electronic device is improved over electronic devices that include multiple openings in an outer case for data and contact charging connectivity.

Further, as a result of the configuration of the bezel assembly including the contact charging bezel, the bezel housing, and the first gasket, and the configuration of the second gasket on the (USB-C) connector, the bezel assembly forms a tight seal with the outer case of the electronic device and acts as part of the outer case, thereby further improving waterproofing of the electronic device. For example, an electronic device including a connector assembly according to the embodiments disclosed herein can achieve IP 68 and IPx8 waterproof ratings and does not require the charging contacts or other portions of the contact charging bezel to be insert molded with the outer case to form a seal with the outer case.

Additionally, according to embodiments disclosed herein, the charging bezel can be configured to contact resilient connection members on the body member of the connector to be electrically connected to the resilient connection members, and the resilient contact members are electrically connected to an FPC that is electrically connected to the connector. As a result, the disclosed embodiments require minimal additional hardware and electrical connections to implement contact charging connectivity together with data/power delivery connectivity, which is an important advantage in miniaturized electronics. Further, due to the co-location of the data and contact charging hardware in combination with the addition of minimal additional hardware and electrical connections, the embodiments disclosed herein simplify repairs to the electronic device.

Reference in this specification to "embodiments" (e.g., "some embodiments," "various embodiments," "one embodiment," "an embodiment," etc.) means that a particular feature, structure, or characteristic described in connection with the embodiment is included in at least one embodiment of the disclosure. The appearances of these phrases in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Spatially relative terms such as "above," "upper," "below," and "lower" may be used herein for ease of description to describe one element's relationship to another element as shown in the figures. Such spatially relative terms are intended to encompass different orientations of the device in use or operation in addition to the orientation depicted in the figures. For example, if the device in the figures is turned over, an element described as being "above" or "upper" relative to another element will then be "below" or "lower" relative to the other element. Thus, the term "above" encompasses both the above and below orientations depending on the spatial orientation of the device. The device may also be oriented in other ways (for example, rotated 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "includes" and "has" specify the presence of stated features, numbers, operations, members, elements, and/or combinations thereof, but do not preclude the presence or addition of one or more other features, numbers, operations, members, elements, and/or combinations thereof.

Due to manufacturing techniques and/or tolerances, variations of the shapes shown in the drawings may occur. Thus, the examples described herein are not limited to the specific shapes shown in the drawings, but include changes in shape that occur during manufacturing.

Although the subject matter has been described in language specific to structural features and/or methodological acts, it is to be understood that the subject matter defined in the appended claims is not necessarily limited to the specific features or acts described above. Specific embodiments have been described herein for purposes of illustration, but various modifications can be made without deviating from the scope of the embodiments. The specific features and acts described above are disclosed as example forms of implementing the claims that follow. Accordingly, the embodiments are not limited except as by the appended claims.

Aspects can be modified, if necessary, to employ the systems, functions, and concepts of the various references described above to provide yet further embodiments. If statements or subject matter in a document noted above conflicts with statements or subject matter of this application, then this application shall control.

## Claims

1. A connector assembly for data transfer and electrical charging, the connector assembly comprising:
a USB-C connector including:
a body member, and
a connector tongue mounted in the body member and configured to connect to a USB-C plug for either one or both of USB-C data transfer and USB-C power delivery; and
a contact charging bezel including:
charging contacts configured to be placed in contact with conductive contact elements of a charging device, and
an arm structure connected to the charging contacts and configured to be mounted on the USB-C connector.

2. The connector assembly of claim 1, wherein the charging contacts are configured to be arranged such that the connector tongue is disposed in a space between the charging contacts.

3. The connector assembly of claim 1 or claim 2, wherein the USB-C connector further includes conductive members disposed on the body member, and
wherein the arm structure is configured to contact the conductive members to be electrically connected to the conductive members.

4. The connector assembly of claim 3, wherein the conductive members are spring clips configured to apply respective forces to the arm structure;
optionally, wherein the arm structure includes recessed portions configured to receive the spring clips to retain the USB-C connector in place.

5. The connector assembly of any preceding claim, further comprising:
a bezel housing covering exterior surfaces of a section of the arm structure and interior surfaces of the section of the arm structure;
optionally, wherein the arm structure includes:
a first arm connected to a first charging contact of the charging contacts and configured to contact a first conductive member among the conductive members; and
a second arm electrically connected to a second charging contact of the charging contacts and configured to contact a second conductive member among the conductive members, and
wherein a portion of the bezel housing is disposed between the first and second charging contacts to electrically insulate the first and second charging contacts from each other and electrically insulate the first and second arms from each other.

6. The connector assembly of claim 5, wherein the charging contacts are exposed from an end of the bezel housing, and
wherein the connector assembly further comprises a gasket disposed on the charging contacts at a position adjacent to the end of the bezel housing.

7. The connector assembly of claim 5 or claim 6, wherein the connector assembly further comprises a gasket disposed on the body member and configured to engage a recessed portion in a portion of the bezel housing covering the interior surfaces of the section of the arm structure.

8. A connector assembly for providing data transfer and charging connections, the connector assembly comprising:
a connector including:
a body member, and
a connector tongue mounted in the body member and configured to connect to a plug for either one or both of data transfer or power delivery;
a first bezel member configured to be mounted on the connector and including a first charging contact configured to be placed in contact with a contact element of a charging device; and
a second bezel member configured to be mounted on the connector and including a second charging contact configured to be placed in contact with another contact element of the charging device,
wherein the connector tongue is configured to be disposed between the first and second bezel members.

9. The connector assembly of claim 8, further comprising:
a first conductive member disposed on the body member; and
a second conductive member disposed on the body member,
wherein the first bezel member is configured to be electrically connected to the first conductive member and the second bezel member is configured to be electrically connected to the second conductive member;
optionally, wherein the first conductive member is a first spring clip and the second conductive member is a second spring clip; wherein the first and second bezel members are configured to be mounted on the body member to contact the first and second spring clips, respectively.

10. The connector assembly of claim 8 or claim 9, further comprising a bezel housing partially covering the first and second bezel members and electrically insulating the first and second bezel members from each other, wherein the bezel housing is molded with the first and second bezel members.

11. The connector assembly of any one of claims 8 to 10, wherein the connector is a USB-C connector.

12. An electronic device, comprising:
an outer case having an opening; and
a connector electrically connected to a printed circuit board (FPC) and including:
a body member mounted on the FPC;
a connector tongue mounted in the body member and aligned with the opening, the connector tongue being configured to connect to a plug for either one or both of data transfer and power delivery; and
a contact charging bezel including:
charging contacts exposed at the opening and configured to be placed in contact with conductive contact elements of a charging device, and
an arm structure connected to the charging contacts and configured to be mounted on the connector.

13. The electronic device of claim 12, wherein the charging contacts are shaped to conform to a shape of the opening and the connector tongue is disposed in a space between the charging contacts.

14. The electronic device of claim 12 or claim 13, wherein the connector is a USB-C connector and further includes resilient conductive members disposed on the body member and electrically connected to the printed circuit board,
wherein the arm structure is configured to contact the resilient conductive members to be electrically connected to the resilient conductive members.

15. The electronic device of any one of claims 12 to 14, further comprising:
a bezel housing covering a section of the arm structure,
wherein the contact charging bezel is retained by a mounting bracket in the outer case such that the bezel housing interfaces with the mounting bracket;
optionally, wherein the charging contacts are exposed from an end of the bezel housing, and
the electronic device further comprises a gasket disposed on the charging contacts between the opening and the end of the bezel housing;
optionally, wherein the connector further comprises a gasket disposed on the body member and engaging a portion of the bezel housing disposed on a portion of the bezel housing covering interior surfaces of the section of the arm structure.
